# EUROPEAN PATENT APPLICATION

(11) **EP 4 741 158 A1**
(43) Date of publication of application: **13.05.2026**
(21) Application number: 24839256.5
(22) Date of filing: 01.04.2024
(51) Int. Cl.: B32B 27/32, B65D 65/40

(54) **PACKAGING FILM, PACKAGING CONTAINER, AND PACKAGING PRODUCT**

(30) Priority: 07.07.2023 JP 2023112028
(71) Applicant: Toppan Holdings Inc., Tokyo 110-0016 (JP)
(72) Inventor: OTSUKA Hiroyuki, Tokyo 110-0016 (JP); ITO Yutaka, Tokyo 110-0016 (JP); NISHIHARA Tsuguki, Tokyo 110-0016 (JP); OCHIAI Shinya, Tokyo 110-0016 (JP); TOMATSURI Takeo, Tokyo 110-0016 (JP)
(74) Representative: Hoffmann Eitle
(86) International application number: PCT/JP2024/013503
(87) International publication number: WO 2025/013358

(57) **Abstract**

A packaging film includes a gas barrier film, an adhesive layer and a sealant layer laminated in this order. The gas barrier film includes a substrate layer and a vapor deposition layer, and the substrate layer includes a polyolefin-based substrate layer containing a polyolefin-based resin, and a heat-resistant layer. The heat-resistant layer contains a high-melting-point resin having a melting point of 180°C or higher, the adhesive layer is obtained by adhering an adhesive resin composition containing a polyolefin-based adhesive resin to the gas barrier film by melt extrusion, and the sealant layer contains a polyolefin-based resin.

## Description

### [Technical Field]

The present disclosure relates to packaging films, packaging containers and packaged products.

### [Background Art]

In recent years, packaging films are increasingly being made from monomaterials to facilitate material recycling. On the other hand, packaging films are also required to maintain functions such as gas barrier properties.

In contrast, packaging films are under consideration which include a gas barrier film, which is formed by providing a gas barrier layer by vapor deposition on a polyolefin-based substrate layer containing a polyolefin-based resin, and a polyolefin-based sealant layer containing a polyolefin-based resin, bonded together by dry lamination using an adhesive that may form a non-polyolefin-based resin.

However, in such packaging films, the use of an adhesive that can form a non-polyolefin-based resin may reduce the quality of recycled resins obtained by material recycling of the packaging films.

Therefore, in order to suppress deterioration of the quality of recycled resins, laminates are known which use, as an adhesive layer, an adhesive resin composition containing a polyolefin-based adhesive resin such as maleic anhydride graft-polymerized polypropylene, instead of an adhesive that can form a non-polyolefin-based resin (see PTL 1 below).

### [Citation List]

### [Patent Literature]

PTL 1: JP 2020-049679 A

### [Summary of Invention]

### [Technical Problem]

Although the laminate described in PTL 1 can increase the ratio of the polyolefin-based resin to the entire laminate, there is still room for improvement in terms of gas barrier properties.

The present disclosure has been made in view of the above issues, and aims to provide a packaging film, a packaging container and a packaged product having excellent gas barrier properties while suppressing a decrease in the ratio of the polyolefin-based resin to the entire packaging film.

### [Solution to Problem]

**In** order to solve the above problems, an aspect of the present disclosure provides a packaging film including: a gas barrier film; an adhesive layer; and a sealant layer, which are laminated in this order, wherein the gas barrier film includes a substrate layer and a vapor deposition layer, the substrate layer includes a polyolefin-based substrate layer containing a polyolefin-based resin, and a heat-resistant layer, the heat-resistant layer contains a high-melting-point resin having a melting point of 180°C or higher, the adhesive layer is obtained by adhering an adhesive resin composition containing a polyolefin-based adhesive resin to the gas barrier film by melt extrusion, and the sealant layer contains a polyolefin-based resin.

According to the above packaging film, it is possible to provide excellent gas barrier properties while suppressing a decrease in the ratio of the polyolefin-based resin to the entire packaging film.

The inventors of the present disclosure presume that the reasons for the above effect are as follows.

That is, when an adhesive resin composition containing a polyolefin-based adhesive resin is adhered to a gas barrier film by melt extrusion, the heat from the adhesive resin composition is transferred to a substrate layer via a vapor deposition layer. The polyolefin-based adhesive resin composition is at a high temperature when it comes into contact with the gas barrier film, but it is subsequently cooled by a cooling roll and becomes low temperature. This may cause the polyolefin-based substrate layer to expand and then contract. Here, since the heat-resistant layer in the substrate layer contains a high-melting-point resin having a melting point of 180°C or higher, it suppresses thermal expansion of the polyolefin-based substrate layer and also suppresses contraction due to cooling, and as a result, stretching and shrinking of the vapor deposition layer, which is prone to cracking, can be suppressed. Therefore, it is possible to provide the packaging film with excellent gas barrier properties.

Further, since the substrate layer includes a heat-resistant layer in addition to the polyolefin-based substrate layer, and the heat-resistant layer contains a high-melting-point resin having a melting point of 180°C or higher, the substrate layer, even if it is thin, can suppress expansion and contraction of the polyolefin-based substrate layer. Therefore, it is possible to suppress a decrease in the ratio of the polyolefin-based resin to the entire packaging film.

In the above packaging film, the heat-resistant layer is preferably provided on the vapor deposition layer side of the polyolefin-based substrate layer.

In this case, since the heat-resistant layer is disposed between the vapor deposition layer and the polyolefin-based substrate layer, even if the polyolefin-based substrate layer tends to expand and contract after the adhesive resin composition is adhered to the gas barrier film by melt extrusion to form the adhesive layer, expansion and contraction of the heat-resistant layer is sufficiently suppressed, and thus stretching and shrinking of the vapor deposition layer, which is prone to cracking, is further suppressed, thereby providing the packaging film with further improved gas barrier properties.

In the above packaging film, the polyolefin-based substrate layer is preferably a stretched film.

In this case, since the crystallinity of the polyolefin-based substrate layer and the heat-resistant layer contained in the substrate layer can be improved, which increases the melting point, the difference in melting point between the sealant layer and the substrate layer can be increased, thereby making it easier to suppress melting of the substrate layer during heat-sealing of the packaging film.

In the above packaging film, the high-melting-point resin of the heat-resistant layer preferably contains a polyamide resin.

Since the melting point of the polyamide resin is high, even if the polyolefin-based substrate layer tends to expand and contract after the adhesive resin composition is adhered to the gas barrier film by melt extrusion, expansion and contraction of the heat-resistant layer is further sufficiently suppressed, and thus stretching and shrinking of the vapor deposition layer, which is prone to cracking, is further suppressed, thereby providing the packaging film with further improved gas barrier properties.

In the above packaging film, the heat-resistant layer preferably contains a high-melting-point resin having a melting point of 185°C or higher.

In this case, even if the polyolefin-based substrate layer tends to expand and contract after the adhesive resin composition is adhered to the gas barrier film by melt extrusion, expansion and contraction of the heat-resistant layer is further sufficiently suppressed, and thus stretching and shrinking of the vapor deposition layer, which is prone to cracking, is further suppressed, thereby providing the packaging film with further improved gas barrier properties. Further, according to the packaging film, due to the heat-resistant layer containing the high-melting-point resin having a melting point of 185°C or higher, deterioration of the gas barrier properties can be suppressed even after moist heat treatment such as retort treatment or boiling treatment.

In the above packaging film, a ratio of a thickness of the heat-resistant layer to a thickness of the gas barrier film is preferably 50% or less.

In this case, the ratio of the polyolefin-based resin to the entire packaging film can be increased, thereby improving the recyclability of the packaging film.

In the above packaging film, the gas barrier film preferably further includes an anchor coat layer between the vapor deposition layer and the substrate layer, the anchor coat layer containing a polyurethane resin.

In this case, even if the polyolefin-based substrate layer expands and contracts after the adhesive resin composition is adhered to the gas barrier film by melt extrusion, the expansion stress and contraction stress transmitted from the substrate layer to the vapor deposition layer is easily mitigated by the anchor coat layer containing a polyurethane resin, thereby further suppressing stretching and shrinking of the vapor deposition layer, which is prone to cracking, and making it possible to provide the packaging film with further improved gas barrier properties.

In the above packaging film, the gas barrier film preferably further includes a coating layer between the vapor deposition layer and the adhesive layer, the coating layer covering the vapor deposition layer.

In this case, when the adhesive resin composition expands and contracts after it is adhered to the gas barrier film by melt extrusion, the expansion stress and contraction stress are not directly transmitted to the vapor deposition layer but indirectly transmitted via the coating layer, thereby suppressing expansion and contraction of the vapor deposition layer.

In the above packaging film, it is preferred that the polyolefin-based resin is a polypropylene-based resin, the coating layer covers the vapor deposition layer and has a hardness of 0.4 GPa or greater in a cross-section, and a ratio of a thickness of the heat-resistant layer to a thickness of the gas barrier film is 5% or greater and 50% or less.

According to the packaging film, the difference in oxygen transmission rate between before and after retort treatment is reduced, and deterioration of the gas barrier properties due to retort treatment can be suppressed.

In the above packaging film, the coating layer may have a hardness of 0.8 GPa or greater in a cross-section.

In the above packaging film, it is preferred that the polyolefin-based resin is a polyethylene-based resin, and a ratio of a thickness of the heat-resistant layer to a thickness of the gas barrier film is 5% or greater and 50% or less.

According to the packaging film, the difference in oxygen transmission rate between before and after boiling treatment is reduced, and deterioration of the gas barrier properties due to boiling treatment can be suppressed.

Another aspect of the present disclosure provides a packaging container including the above-mentioned packaging film. The packaging container may be a packaging bag.

The packaging container includes the above packaging film, and according to the packaging film, it is possible to provide excellent gas barrier properties while suppressing a decrease in the ratio of the polyolefin-based resin to the entire packaging film. Therefore, according to the above-mentioned packaging container, it is possible to provide excellent gas barrier properties while suppressing a decrease in the ratio of the polyolefin-based resin to the entire packaging container.

Still another aspect of the present disclosure provides a packaged product including the above-mentioned packaging container, and contents contained in the packaging container.

The packaged product includes the above packaging container, and according to the packaging container, it is possible to provide excellent gas barrier properties while suppressing a decrease in the ratio of the polyolefin-based resin to the entire packaging container. Therefore, according to the packaged product, it is possible to facilitate recycling after opening and also suppress deterioration in the quality of the contents.

Further, in this specification, polyolefin-based resins may also be referred to as polyolefin resins, polyethylene-based resins may also be referred to as polyethylene resins, and polypropylene-based resins may also be referred to as polypropylene resins.

### [Advantageous Effects of Invention]

According to the present disclosure, it is possible to provide a packaging film, a packaging container and a packaged product having excellent gas barrier properties while suppressing a decrease in the ratio of the polyolefin-based resin to the entire packaging film.

### [Brief Description of Drawings]

Fig. 1 is a cross-sectional view illustrating an embodiment of a packaging film of the present disclosure.
Fig. 2 is a cross-sectional view illustrating an embodiment of a packaged product of the present disclosure.

### [Description of Embodiments]

Some embodiments of the present disclosure will be described in detail below. It should be noted that the present invention is not limited to the following embodiments.

### <Packaging Film>

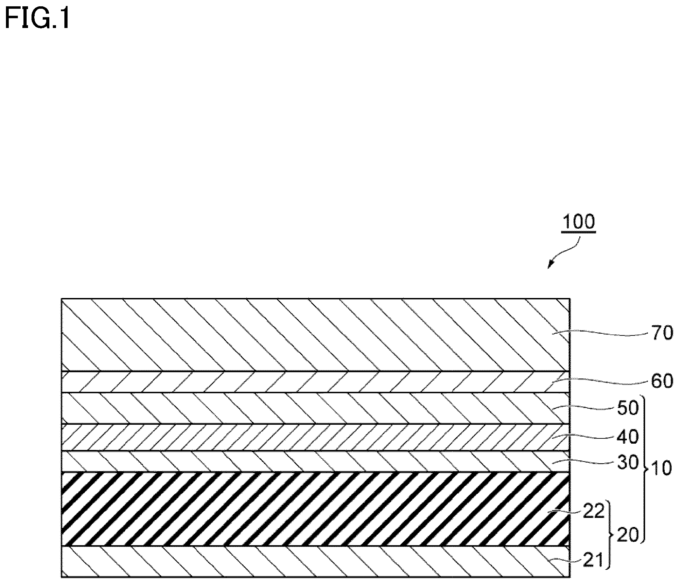

First, with reference to Fig. 1, an embodiment of the packaging film of the present disclosure will be described. Fig. 1 is a cross-sectional view illustrating an embodiment of a packaging film of the present disclosure.

A packaging film 100 shown in Fig. 1 includes a gas barrier film 10, an adhesive layer 60 and a sealant layer 70 laminated in this order. The gas barrier film 10 includes a substrate layer 20 and a vapor deposition layer 40. The substrate layer 20 includes a polyolefin-based substrate layer 21 containing a polyolefin-based resin, and a heat-resistant layer 22.

The heat-resistant layer 22 contains a high-melting-point resin having a melting point of 180°C or higher.

The adhesive layer 60 is obtained by adhering an adhesive resin composition containing a polyolefin-based adhesive resin to the gas barrier film 10 by melt extrusion.

The sealant layer 70 contains a polyolefin-based resin.

The packaging film 100 may further include an anchor coat layer 30 between the vapor deposition layer 40 and the substrate layer 20. In addition, the packaging film 100 may further include a coating layer 50 between the vapor deposition layer 40 and the adhesive layer 60 to cover the vapor deposition layer 40.

According to the above packaging film 100, it is possible to provide excellent gas barrier properties while suppressing a decrease in the ratio of the polyolefin-based resin to the entire packaging film 100.

In the following description, the gas barrier film 10, the adhesive layer 60 and the sealant layer 70 will be described in detail.

### (1) Gas Barrier Film

The gas barrier film 10 includes the substrate layer 20 and the vapor deposition layer 40, and the substrate layer 20 includes the polyolefin-based substrate layer 21 containing a polyolefin-based resin, and the heat-resistant layer 22. The substrate layer 20 may further include, if necessary, an adhesive layer (hereinafter, also referred to as a "substrate adhesive layer") between the polyolefin-based substrate layer 21 and the heat-resistant layer 22. In addition, the gas barrier film 10 may further include a printed layer, if necessary.

### (Polyolefin-based Substrate Layer)

The polyolefin-based substrate layer 21 is a substrate layer containing a polyolefin-based resin. Specific examples of the polyolefin-based resin include polyethylene-based resins and polypropylene-based resins.

Examples of the polyethylene-based resins include low-density polyethylene resin (LDPE), medium-density polyethylene resin (MDPE), linear low-density polyethylene resin (LLDPE), ethylene-vinyl acetate copolymer (EVA), ethylene-α olefin copolymer and ethylene-(meth)acrylic acid copolymer.

Examples of the polypropylene-based resins include homo polypropylene, block polypropylene, random polypropylene and propylene-α olefin copolymers. Examples of the α-olefin include ethylene and 1-butene.

Among these, polypropylene-based resins are preferred from the viewpoint of heat resistance.

Among the polypropylene-based resins, when prioritizing the rigidity and heat resistance of the packaging containers produced using the packaging film 100, it is preferred to use homopolymers.

Further, the polyolefin-based resin may be a biomass-derived polyolefin-based resin, or may be a mechanically or chemically recycled polyolefin-based resin.

The polyolefin-based substrate layer 21 may have a single-layer structure or a multilayer structure.

By providing the substrate layer 20 with the polyolefin-based substrate layer 21, the heat resistance and oil resistance of the packaging film 100 produced using the substrate layer 20 can be improved.

The polyolefin-based substrate layer 21 may be a stretched film or a non-stretched film, but is preferably a stretched film from the viewpoint of gas barrier properties. The stretched film may be a uniaxially stretched film or a biaxially stretched film, but is preferably a biaxially stretched film since it improves the heat resistance of the packaging film 100.

The polyolefin-based resin content in the polyolefin-based substrate layer 21 is preferably 70 mass% or greater, more preferably 80 mass% or greater, and even more preferably 90 mass% or greater.

The polyolefin-based substrate layer 21 may further contain additives as necessary. Examples of the additives include crosslinking agents, antioxidants, antiblocking agents, slip agents, ultraviolet absorbers, photostabilizers, fillers, reinforcing agents, antistatic agents, pigments and modifying resins.

The thickness of the polyolefin-based substrate layer 21 is preferably 5 µm or greater, more preferably 10 µm or greater, and particularly preferably 15 µm or greater. The thickness of the polyolefin-based substrate layer 21 of 5 µm or greater can further improve the strength and heat resistance of the substrate layer 20.

The thickness of the polyolefin-based substrate layer 21 is preferably 40 µm or less, more preferably 30 µm or less, and particularly preferably 20 µm or less. The thickness of the polyolefin-based substrate layer 21 of 40 µm or less can further improve the processability of the substrate layer 20, imparting flexibility of the packaging film 100.

The polyolefin-based substrate layer 21 may be subjected to a surface-treatment. This improves the adhesion to the heat-resistant layer 22.

The method of the surface-treatment is not particularly limited, and examples thereof include corona discharge treatment, ozone treatment, low-temperature plasma treatment, glow discharge treatment, and oxidation treatment using chemicals.

### (Heat-Resistant Layer)

The heat-resistant layer 22 contains a high-melting-point resin having a melting point of 180°C or higher. Accordingly, when an adhesive resin composition is adhered to the gas barrier film 10 by melt extrusion, during which the heat from the adhesive resin composition is transferred to the substrate layer 20 via the vapor deposition layer 40 and subsequently the substrate layer 20 is cooled, expansion and contraction is less likely to occur, making it possible to suppress expansion and contraction of the polyolefin-based substrate layer 21 and suppress stretching and shrinking of the vapor deposition layer 40, which is prone to cracking, and as a result, the packaging film 100 with excellent gas barrier properties can be provided.

The melting point can be measured using a differential scanning calorimeter (DSC).

The heat-resistant layer 22 may be provided on the vapor deposition layer 40 side of the polyolefin-based substrate layer 21 as shown in Fig. 1, or may be provided on the side of the polyolefin-based substrate layer 21 opposite to that facing the vapor deposition layer 40, but it is preferably provided on the vapor deposition layer 40 side of the polyolefin-based substrate layer 21. In this case, since the heat-resistant layer 22 is disposed between the vapor deposition layer 40 and the polyolefin-based substrate layer 21, even if the polyolefin-based substrate layer 21 tends to expand and contract after the adhesive resin composition is adhered to the gas barrier film 10 by melt extrusion to form the adhesive layer 60, expansion and contraction of the heat-resistant layer 22 is sufficiently suppressed, and thus stretching and shrinking of the vapor deposition layer 40, which is prone to cracking, is further suppressed, thereby providing the packaging film 100 with further improved gas barrier properties.

The melting point of the high-melting-point resin is preferably 185°C or higher, more preferably 190°C or higher, even more preferably 200°C or higher, and particularly preferably 205°C or higher.

Due to the melting point of the high-melting-point resin being 185°C or higher, even if the polyolefin-based substrate layer 21 tends to expand and contract after the adhesive resin composition is adhered to the gas barrier film 10 by melt extrusion, expansion and contraction of the heat-resistant layer 22 is further sufficiently suppressed, and thus stretching and shrinking of the vapor deposition layer 40, which is prone to cracking, is further suppressed, thereby providing the packaging film 100 with further improved gas barrier properties. Further, according to the packaging film 100, due to the heat-resistant layer 22 containing the high-melting-point resin having a melting point of 185°C or higher, deterioration of the gas barrier properties can be suppressed even after moist heat treatment such as retort treatment or boiling treatment.

From the viewpoint of film-forming properties of the heat-resistant layer 22, the melting point of the high-melting-point resin is preferably 265°C or less, more preferably 260°C or less, even more preferably 250°C or less, still even more preferably 240°C or less, and particularly preferably 230°C or less.

The high-melting-point resin may be any resin having a melting point of 180°C or higher, and examples thereof include vinyl resins, polyamide resins, polyimide resins, polyester resins and cellulose resins. These can be used singly or in combination of two or more.

In particular, polyester resins or polyamide resins are preferred. These resins have polar groups, and therefore can significantly improve the adhesion between the heat-resistant layer 22 and the vapor deposition layer 40, and can effectively improve the gas barrier properties of the vapor deposition layer 40.

Examples of the vinyl resins include ethylene vinyl alcohol (EVOH). The ethylene content (mol%) in EVOH is preferably low, for example, preferably 35 mol% or less, and more preferably 32 mol% or less.

Examples of the polyester resins include polyethylene terephthalate (PET) resins and polyethylene naphthalate (PEN) resins.

Examples of the polyamide resins include Nylon 6, Nylon 6,6, MXD Nylon and amorphous Nylon.

The high-melting-point resin is preferably a polyamide resin. Since the melting point of the polyamide resin is high, even if the polyolefin-based substrate layer 21 tends to expand and contract after the adhesive resin composition is adhered to the gas barrier film 10 by melt extrusion, expansion and contraction of the heat-resistant layer 22 is further sufficiently suppressed, and thus stretching and shrinking of the vapor deposition layer 40, which is prone to cracking, is further suppressed, thereby providing the packaging film 100 with further improved gas barrier properties. Further, even after the packaging film 100 is bent, deterioration of the gas barrier properties of the packaging film 100 can be suppressed, thereby improving the heat resistance of the packaging film 100. Furthermore, even after the packaging film 100 is subjected to moist heat treatment such as retort treatment or boiling treatment, deterioration of the gas barrier properties can be suppressed.

The high-melting-point resin is more preferably Nylon 6.

The high-melting-point resin content in the heat-resistant layer 22 is preferably 70 mass% or greater, more preferably 80 mass% or greater, and even more preferably 90 mass% or greater.

The thickness of the heat-resistant layer 22 is preferably 1 µm or greater, and more preferably 3 µm or greater. The thickness of the heat-resistant layer 22 of 1 µm or greater can effectively suppress expansion or contraction of the polyolefin-based substrate layer 21 when the substrate layer 20 is heated or cooled.

The thickness of the heat-resistant layer 22 is preferably 20 µm or less, more preferably 10 µm or less, and even more preferably 5 µm or less.

The thickness of the heat-resistant layer 22 of 20 µm or less can further increase the ratio of the polyolefin-based resin to the entire packaging film 100, improving the recyclability of the packaging film 100.

In the packaging film 100, the ratio of the thickness of the heat-resistant layer 22 to the thickness of the gas barrier film 10 is preferably 50% or less, more preferably 40% or less, even more preferably 30% or less, and particularly preferably 25% or less.

When the ratio of the thickness of the heat-resistant layer 22 to the thickness of the gas barrier film 10 is 50% or less, the ratio of the polyolefin-based resin to the entire the packaging film 100 can be increased, improving the recyclability of the packaging film 100.

In the packaging film 100, the ratio of the thickness of the heat-resistant layer 22 to the thickness of the gas barrier film 10 may be 2.5% or greater, preferably 3.0% or greater, more preferably 5.0% or greater, and even more preferably 10% or greater. When the ratio of the thickness of the heat-resistant layer 22 to the thickness of the gas barrier film 10 is 5.0% or greater, expansion or contraction of the polyolefin-based substrate layer 21 can be effectively suppressed when the substrate layer 20 is heated or cooled.

### (Substrate Adhesive Layer)

The substrate adhesive layer contains a polyolefin-based adhesive resin. The polyolefin-based adhesive resin refers to an adhesive resin containing a polyolefin resin.

Examples of the polyolefin-based adhesive resin include acid-modified polypropylene-based resins and acid-modified polyethylene-based resins.

Examples of the acid-modified polypropylene-based resins include maleic acid-modified polypropylene-based resins.

The maleic acid-modified polypropylene-based resin is a resin obtained by modifying a polypropylene-based resin with maleic acid.

Examples of the polypropylene-based resins include homo polypropylene, block polypropylene, random polypropylene and propylene-α olefin copolymers. Examples of the α-olefin include ethylene and 1-butene.

Examples of the acid-modified polyethylene-based resins include maleic acid-modified polyethylene-based resins.

The maleic acid-modified polyethylene-based resin is a resin obtained by modifying a polyethylene-based resin with maleic acid.

Examples of the polyethylene-based resins include high-density polyethylene, medium-density polyethylene, low-density polyethylene, and linear low-density polyethylene obtained by copolymerizing ethylene with α-olefin. Examples of the α-olefin include ethylene, 1-butene and 1-hexane.

The thickness of the substrate adhesive layer is not particularly limited, but may preferably be 1 µm or greater. The thickness of the substrate adhesive layer is more preferably 3 µm or greater, and even more preferably 5 µm or greater. The thickness of the substrate adhesive layer of 1 µm or greater effectively improves the adhesion between the polyolefin-based substrate layer 21 and the heat-resistant layer 22.

The thickness of the substrate adhesive layer may be 10 µm or less, preferably 8 µm or less, more preferably 6 µm or less, and even more preferably 5 µm or less.

### (Substrate Layer)

The substrate layer 20 can be obtained by coextrusion or the like.

The thickness of the substrate layer 20 is not particularly limited, but is preferably 10 µm or greater, and more preferably 20 µm or greater. The thickness of the substrate layer 20 of 10 µm or greater effectively improves the adhesion between the gas barrier film 10 and the sealant layer 70.

The thickness of the substrate layer 20 may be 50 µm or less, preferably 40 µm or less, and more preferably 30 µm or less.

### (Anchor Coat Layer)

The anchor coat layer 30 is a layer that further improves the adhesion between the substrate layer 20 and the vapor deposition layer 40, and is provided between the substrate layer 20 and the vapor deposition layer 40.

The material constituting the anchor coat layer 30 is not limited as long as it is capable of improving the adhesion between the substrate layer 20 and the vapor deposition layer 40, and preferably contains a polyurethane resin.

In this case, even if the polyolefin-based substrate layer 21 tends to expand and contract after the adhesive resin composition is adhered to the gas barrier film 10 by melt extrusion, not only is the expansion and contraction of the heat-resistant layer 22 sufficiently suppressed, but also the expansion stress and contraction stress transmitted from the substrate layer 20 to the vapor deposition layer 40 is easily mitigated by the anchor coat layer 30 containing a polyurethane resin, thereby further suppressing stretching and shrinking of the vapor deposition layer 40, which is prone to cracking, and making it possible to provide the packaging film 100 with further improved gas barrier properties.

Such a polyurethane resin may be compose of, for example, a reaction product of organosilane or an organometallic compound, a polyol compound, and an isocyanate compound.

The organosilane may be, for example, a trifunctional organosilane or a hydrolysate of trifunctional organosilane. The organometallic compound may be, for example, a metal alkoxide or a hydrolysate of metal alkoxide. A metal element contained in the organometallic compound may be, for example, Al, Ti, Zr, or the like. The hydrolysate of organosilane and the hydrolysate of metal alkoxide may each have at least one hydroxyl group. The polyol compound is preferably an acrylic polyol from the viewpoint of transparency. The isocyanate compound mainly functions as a crosslinking agent or a curing agent. The polyol compound and the isocyanate compound may be a monomer or a polymer.

The thickness of the anchor coat layer 30 is not particularly limited as long as it is capable of improving the adhesion between the substrate layer 20 and the vapor deposition layer 40, and is preferably 20 nm or greater, more preferably 50 nm or greater, and even more preferably 100 nm or greater. When the thickness of the anchor coat layer 30 is 20 nm or greater, even if the polyolefin-based substrate layer 21 expands and contracts after the adhesive resin composition is adhered to the gas barrier film 10 by melt extrusion, the expansion stress and contraction stress transmitted from the substrate layer 20 to the vapor deposition layer 40 is effectively mitigated by the anchor coat layer 30 containing a polyurethane resin, thereby causing the vapor deposition layer 40, which is prone to cracking, to be less likely to expand and contract, and making it possible to provide the packaging film 100 with further improved gas barrier properties.

From the viewpoint of suppressing the ratio of the polyolefin-based resin to the entire packaging film 100, the thickness of the anchor coat layer 30 is preferably 2 µm or less. In this case, deterioration of the gas barrier properties can be further suppressed even after moist heat treatment such as retort treatment or boiling treatment, compared to the case where the thickness of the anchor coat layer 30 exceeds 2 µm. The thickness of the anchor coat layer 30 is preferably 1.5 µm or less, more preferably 1.0 µm or less, even more preferably 0.5 µm or less, and still even more preferably 0.3 µm or less.

### (Vapor Deposition Layer)

The vapor deposition layer 40 is a layer formed by vapor deposition, and is composed of an inorganic material. Examples of the inorganic material include metals and metal oxides.

Examples of metal elements constituting the metals or metal oxides include at least one metal element selected from the group consisting of Si, Al, Mg, Sn, Ti and In. The metal oxide is preferably silicon oxide (SiOx), aluminum oxide (AlOx), or a mixture thereof. Both SiOx and AlOx are excellent in water vapor barrier properties, and therefore can improve the water vapor barrier properties of the packaging film 100. In particular, SiOx is preferred as the metal oxide. In this case, the packaging film 100 can have excellent water vapor barrier properties.

The vapor deposition layer 40 may have a single-layer structure or a multilayer structure.

The thickness of the vapor deposition layer 40 is not particularly limited, but may preferably be 5 nm or greater. In this case, deterioration of the gas barrier properties can be more sufficiently suppressed even after the packaging film 100 is subjected to moist heat treatment such as retort treatment or boiling treatment, compared to the case where the thickness of the vapor deposition layer 40 is less than 5 nm. The thickness of the vapor deposition layer 40 is more preferably 8 nm or greater, even more preferably 10 nm or greater, and still even more preferably 12 nm or greater.

The thickness of the vapor deposition layer 40 is preferably 300 nm or less. In this case, deterioration of the gas barrier properties can be further suppressed even after the packaging film 100 is subjected to moist heat treatment such as retort treatment or boiling treatment, compared to the case where the thickness of the vapor deposition layer 40 exceeds 300 nm. Further, the ratio of the polyolefin-based resin to the entire packaging film 100 can be increased, thereby improving the recyclability of the packaging film 100. The thickness of the vapor deposition layer 40 is more preferably 200 nm or less, even more preferably 100 nm or less, and still even more preferably 50 nm or less.

### (Coating Layer)

The coating layer 50 is a layer that covers the vapor deposition layer 40. Due to the coating layer 50 included in the gas barrier film 10, when the adhesive resin composition expands and contracts after it is adhered to the gas barrier film 10 by melt extrusion, the expansion stress and contraction stress are not directly transmitted to the vapor deposition layer 40 but indirectly transmitted via the coating layer 50, thereby suppressing expansion and contraction of the vapor deposition layer 40.

The hardness of the cross-section of the coating layer 50 measured by nanoindentation is not particularly limited, but is preferably 1.15 GPa or less. In this case, when the adhesive resin composition expands and contracts after it is adhered to the gas barrier film 10 by melt extrusion, the expansion stress and contraction stress are effectively mitigated by the coating layer 50, and therefore, expansion and contraction of the vapor deposition layer 40, which is prone to cracking, are further suppressed.

The hardness of the cross-section of the coating layer 50 is more preferably 1.10 GPa or less, even more preferably 1.0 GPa or less, still even more preferably 0.9 GPa or less, still even more preferably 0.8 GPa or less, and still even more preferably 0.7 GPa or less.

The hardness of the cross-section of the coating layer 50 may be 0.15 GPa or greater, preferably 0.20 GPa or greater, more preferably 0.40 GPa or greater, even more preferably 0.50 GPa or greater, still even more preferably 0.60 GPa or greater, still even more preferably 0.70 GPa or greater, and still even more preferably 0.80 GPa or greater. The hardness of the coating layer 50 of 0.15 GPa or greater can achieve higher gas barrier properties compared to the case where the hardness is less than 0.15 GPa, providing the advantage of having excellent protective function for the vapor deposition layer 40 during manufacturing of the packaging container.

The hardness of the cross-section of the coating layer 50 is measured by nanoindentation. Nanoindentation refers to a measurement method that conducts a quasistatic indentation test on an intended measurement target to acquire the mechanical properties of the sample.

The measurement of the hardness of the cross-section of the coating layer 50 is performed by providing a measurement sample and measuring the measurement sample. The measurement sample (cross-sectional sample) is prepared as below.

That is, the packaging film 100 is subjected to corona treatment on both surfaces, and then embedded in a visible light-curable resin (Aronix LCR D-800, manufactured by Toagosei Co., Ltd.). Then, the packaging film 100 is cut perpendicularly to the lamination direction with a diamond knife Microstar LH using an ultramicrotome Leica EM UC7. The cross-section thus formed is subjected to a finish treatment under the conditions of a cutting thickness of Feed 200 nm and a cutting rate of Speed 1 mm/s, and used as a measurement sample.

For the measurement, a Hysitron TI-Premier (trade name) manufactured by Bruker Japan K.K. is used as a measurement device, and a Berkovich diamond indenter manufactured by Bruker Japan K.K. is used as an indenter. The measurement conditions are as follows.
- Temperature: Normal temperature (25°C)
- Mode: Load control mode
- Indentation and unloading: After indentation is performed up to a load of 15 µN at an indentation rate of 1.5 µN/sec, the maximum load is held for 5 seconds, and then unloading is performed at the rate of 1.5 µN/sec.
- Measurement points: A shape image of the sample surface is acquired by a shape measurement function of the measurement device, which scans the sample surface with an indenter, and 20 points are specified on the sample surface in the shape image at intervals of 1 µm or greater.

When calculating the hardness, the relationship between the contact depth between the indenter and the sample and the projected contact area is calibrated in advance using fused silica as a standard sample. Then, the region of the unloading curve ranging from 60% to 95% of the maximum load in the unloading phase is analyzed using the Oliver-Pharr method to calculate the hardness.

The coating layer 50 may be a gas barrier coating layer. In this case, the gas barrier properties of the packaging film 100 are improved. Further, even if damage such as cracking occurs in the vapor deposition layer 40, deterioration of the gas barrier properties of the packaging film 100 can be suppressed.

The gas barrier coating layer may be composed of, for example, a cured product of a composition containing a water-soluble polymer and at least one of a metal alkoxide and a hydrolysate thereof. The composition may further contain at least one of a silane coupling agent and a hydrolysate thereof.

Examples of the water-soluble polymer include polyvinyl alcohol, polyvinyl pyrrolidone, starch, methyl cellulose, carboxymethyl cellulose, sodium alginate, and the like. Among these, polyvinyl alcohol (hereinafter, also referred to as "PVA") is particularly preferred since it can easily improve the oxygen barrier properties of the gas barrier film.

Examples of the metal alkoxide include compounds represented by the following general formula (1).

M(OR¹¹)ₘ(R¹²)ₙ₋ₘ ... (1)

In the above formula (1), R¹¹ is a monovalent organic group having 1 to 8 carbon atoms, and may be an alkyl group such as a methyl group or an ethyl group (OR¹¹ is a hydrolysable group). R¹² is a monovalent organic group having 1 to 8 carbon atoms, and may be an alkyl group such as a methyl group or an ethyl group. M represents an n-valent metal atom such as Si, Ti, Al or Zr. m represents an integer from 1 to n. When a plurality of R¹¹s and R¹²s are present, R¹¹s or R¹²s may be the same or different.

Specific examples of the metal alkoxide include tetraethoxysilane [Si(OC₂H₅)₄] and triisopropoxyaluminum [Al(O-2'-C₃H₇)₃]. Tetraethoxysilane (hereinafter also referred to as "TEOS") and triisopropoxy aluminum are preferred since they are relatively stable in an aqueous solvent after hydrolysis.

Examples of the silane coupling agent include compounds represented by the following general formula (2).

(R²Si(OR³)₃)ₙ ... (2)

In the above general formula (2), R² represents a monovalent organic group, and R³ represents an alkyl group or -C₂H₄OCH₃.

In this case, the adhesion between the gas barrier coating layer and the vapor deposition layer 40 can be improved, suppressing delamination in the packaging film 100.

Further, R² and R³ may be the same or different. R³s may be the same or different.

Examples of the monovalent organic group represented by R² include a vinyl group, an epoxy group, a mercapto group, an amino group and a monovalent organic functional group containing an isocyanate group. In particular, an isocyanate group is preferred as a monovalent organic functional group. In this case, the composition, when cured, is capable of having excellent hot water resistance and imparting high lamination strength even after applying moisture heat treatment such as retort treatment to the packaging film 100.

Examples of the alkyl group represented by R³ include a methyl group and an ethyl group. In particular, a methyl group is preferred. In this case, hydrolysis proceeds rapidly.

n represents an integer of 1 or more. When n is 1, the silane coupling agent represents a monomer, whereas when n is 2 or more, the silane coupling agent represents a polymer. Preferably, n is 3. In this case, the hot water resistance of the gas barrier coating layer can be further improved, enabling the gas barrier coating layer to have high lamination strength even after undergoing moist heat treatment such as retort treatment or boiling treatment.

Specific examples of the silane coupling agent include vinyltrimethoxysilane, γ-chloropropylmethyldimethoxysilane, γ-chloropropyltrimethoxysilane, 3-glycidoxypropylmethyldimethoxysilane, 3-glycidoxypropyltrimethoxysilane, 3-glycidoxypropylmethyldiethoxysilane, 3-glycidoxypropylmethyltriethoxysilane, γ-methacryloxypropyltrimethoxysilane, γ-methacryloxypropylmethyldimethoxysilane and 1,3,5-tris(3-methoxysilylpropyl)isocyanurate.

When the composition contains PVA as the water soluble polymer, the amount of PVA in the composition may be 15 mass% or greater, preferably 20 mass% or greater, and more preferably 25 mass% or greater relative to the total solid content of the composition from the viewpoint of maintaining the flexibility of the gas barrier coating layer and facilitating the formation of the gas barrier coating layer. When the composition contains PVA as the water soluble polymer, the amount of PVA in the composition may be 70 mass% or less, preferably 60 mass% or less, and more preferably 50 mass% or less relative to the total solid content of the composition from the viewpoint of easily maintaining low oxygen transmission rate even after heat sterilization treatment.

When the composition contains TEOS as the metal alkoxide, the amount of TEOS in the composition may be 30 mass% or greater, preferably 35 mass% or greater, and more preferably 40 mass% or greater relative to the total solid content of the composition from the viewpoint of easily maintaining low oxygen transmission rate even after heat sterilization treatment. When the composition contains TEOS as the metal alkoxide, the amount of TEOS in the composition may be 80 mass% or less, preferably 75 mass% or less, and more preferably 70 mass% or less relative to the total solid content of the composition from the viewpoint of maintaining the flexibility of the gas barrier coating layer and facilitating the formation of the gas barrier coating layer. In the present specification, the amount of TEOS means a value in terms of SiO₂ equivalent.

When the composition contains isocyanurate silane as the silane coupling agent, the amount of isocyanurate silane in the composition may be 1 mass% or greater, preferably 3 mass% or greater, and more preferably 5 mass% or greater relative to the total solid content of the composition from the viewpoint of easily achieving hot water resistance and easily achieving excellent adhesion even after heat sterilization treatment. When the composition contains isocyanurate silane as the silane coupling agent, the amount of isocyanurate silane in the composition may be 20 mass% or less, preferably 15 mass% or less, and more preferably 10 mass% or less relative to the total solid content of the composition from the viewpoint of preventing the amounts of other components in the composition from being too small and easily maintaining low oxygen transmission rate even after heat sterilization treatment.

The gas barrier coating layer can be formed by coating the vapor deposition layer 40 with a gas barrier coating layer-forming composition and then heating and drying the composition. The gas barrier coating layer-forming composition can be prepared by mixing a solution of a water-soluble polymer in an aqueous solvent (water, a mixed solvent of water and alcohol, or the like) with at least one of a metal alkoxide and a silane coupling agent, or with these materials pre-hydrolyzed in advance. The composition (mixed solution) may further contain known additives such as isocyanate compounds, dispersants, stabilizers, viscosity modifiers and colorants.

The drying temperature for forming the gas barrier coating layer may be, for example, 40°C or higher, preferably 60°C or higher, and more preferably 90°C or higher, and may be 140°C or lower, preferably 130°C or lower, and more preferably 120°C or lower.

The thickness of the gas barrier coating layer may be 80 nm or greater, preferably 90 nm or greater, more preferably 100 nm or greater, even more preferably 150 nm or greater, still even more preferably 200 nm or greater, and still even more preferably 300 nm or greater. The thickness of the gas barrier coating layer of 80 nm or greater can easily maintain low oxygen transmission rate even after heat sterilization treatment. The thickness of the gas barrier coating layer may be 1,000 nm or less, preferably 700 nm or less, more preferably 500 nm or less, and even more preferably 400 nm or less. The thickness of the gas barrier coating layer of 1,000 nm or less can suppress deterioration of the gas barrier properties due to occurrence of cracking in the gas barrier coating layer during coating. The thickness of the gas barrier coating layer may be 80 nm to 1,000 nm from the viewpoint of maintaining low oxygen transmission rate even after heat sterilization treatment and suppress deterioration of the gas barrier properties due to occurrence of cracking in the gas barrier coating layer during coating.

### (Printed Layer)

As described above, the gas barrier film 10 may further include a printed layer, if necessary. The printed layer may be provided on at least one of the substrate layer 20 and the coating layer 50.

The printed layer is a layer formed using ink prepared by adding various pigments, plasticizers, desiccants, stabilizers, and the like to a urethane-based, acrylic-based, nitrocellulose-based or rubber-based binder resin. The printed layer can display characters, patterns, symbols, and combinations thereof.

The ink may be a water-based ink or an oil-based ink, but is preferably a water-based ink. Since the water-based ink uses water or alcohol as a solvent, the environmental impact can be further reduced. Further, the ink may or may not be a biomass ink, but is preferably a biomass ink from the viewpoint of reducing the environmental impact. The biomass ink refers to ink containing components obtained from biological resources (biomass) such as cotton, pulp, rice bran, vegetable oil and angiosperm seeds.

The printed layer can be formed by conventionally known printing methods such as gravure printing, offset printing and flexographic printing.

### (2) Adhesive Layer

The adhesive layer 60 is a layer obtained by adhering an adhesive resin composition containing a polyolefin-based adhesive resin to the gas barrier film 10 by melt extrusion. The polyolefin-based adhesive resin refers to an adhesive resin containing a polyolefin resin.

Examples of the polyolefin-based adhesive resin include acid-modified polypropylene-based resins and acid-modified polyethylene-based resins.

Examples of the acid-modified polypropylene-based resins include maleic anhydride graft-modified polypropylene-based resins.

The maleic anhydride graft-modified polypropylene-based resin is a resin obtained by graft-modifying a polypropylene-based resin with maleic anhydride. The graft ratio of the maleic anhydride is preferably 0.1 mass% to 1 mass%. The graft ratio of the maleic anhydride of 0.1 mass% or greater can further improve the adhesiveness of the adhesive layer 60. The graft ratio of the maleic anhydride of 1 mass% or less reduces moisture adsorption and foaming. In addition, the processability of the adhesive resin composition is improved.

Examples of the polypropylene-based resins include homo polypropylene, block polypropylene, random polypropylene and propylene-α olefin copolymers. Examples of the α-olefin include ethylene and 1-butene.

Examples of the acid-modified polyethylene-based resins include maleic anhydride graft-modified polyethylene-based resins.

The maleic anhydride graft-modified polyethylene-based resin is a resin obtained by graft-modifying a polyethylene-based resin with maleic anhydride. The graft ratio of the maleic anhydride is preferably 0.1 mass% to 1 mass%. The graft ratio of the maleic anhydride of 0.1 mass% or greater can further improve the adhesiveness of the adhesive layer 60. The graft ratio of the maleic anhydride of 1 mass% or less reduces moisture adsorption and foaming. In addition, the processability of the adhesive resin composition is improved.

Examples of the polyethylene-based resins include high-density polyethylene, medium-density polyethylene, low-density polyethylene, and linear low-density polyethylene obtained by copolymerizing ethylene with α-olefin. Examples of the α-olefin include ethylene, 1-butene and 1-hexane.

The adhesive layer 60 is obtained by adhering an adhesive resin composition to the gas barrier film 10 by melt extrusion. After the adhesive resin composition is brought into contact with the coating layer 50 of the gas barrier film 10, it is cooled by a cooling roll.

The thickness of the adhesive layer 60 is not particularly limited, but is preferably 1 µm or greater, more preferably 5 µm or greater, and even more preferably 10 µm or greater. The thickness of the adhesive layer 60 of 1 µm or greater effectively improves the adhesion between the gas barrier film 10 and the sealant layer 70 effectively improves the adhesion between the gas barrier film 10 and the sealant layer 70.

The thickness of the adhesive layer 60 may preferably be 40 µm or less, more preferably 30 µm or less, even more preferably 20 µm or less, and still even more preferably 15 µm or less.

The adhesive layer 60 is preferably obtained by heat-treating an adhesive resin composition. In this case, the adhesive strength of the adhesive layer 60 can be enhanced, thereby improving the heat sealability, impact resistance, and resistance to moist heat treatment such as retort treatment, boiling treatment or humidity conditioning treatment of the packaging film 100. The heat treatment can be performed by forming a layer made of an adhesive resin composition, and applying heat to the layer using a heater roll or an oven. This heat treatment may be performed, for example, while the gas barrier film 10 and the sealant layer 70 are bonded together via the adhesive resin composition.

### (3) Sealant Layer

The sealant layer 70 contains a polyolefin-based resin.

Examples of the polyolefin-based resin include polyethylene-based resins and polypropylene-based resins.

Examples of the polyethylene-based resins include low-density polyethylene resin (LDPE), medium-density polyethylene resin (MDPE), linear low-density polyethylene resin (LLDPE), ethylene-vinyl acetate copolymer (EVA), ethylene-α olefin copolymer and ethylene-(meth)acrylic acid copolymer.

Examples of the polypropylene-based resins include homo polypropylene, block polypropylene, random polypropylene and propylene-α olefin copolymers. Examples of the α-olefin include ethylene and 1-butene.

Among these, polypropylene-based resins are preferred from the viewpoint of heat resistance.

Further, among the polypropylene-based resins, when prioritizing the rigidity and heat resistance of the packaging containers produced using the packaging film 100, it is preferred to use homopolypropylene.

Further, the polyolefin-based resin may be a biomass-derived polyolefin-based resin, or may be a mechanically or chemically recycled polyolefin-based resin.

The sealant layer 70 may have a single-layer structure or a multilayer structure.

The sealant layer 70 may further contain an additive, if necessary. Examples of the additives include crosslinking agents, antioxidants, antiblocking agents, slip agents, ultraviolet absorbers, photostabilizers, fillers, reinforcing agents, antistatic agents, pigments and modifying resins.

When the polyolefin-based resin contained in the polyolefin-based substrate layer 21 of the substrate layer 20 and the polyolefin-based adhesive resin contained in the adhesive layer 60 are polypropylene-based resins, the polyolefin-based resin contained in the sealant layer 70 is preferably a polypropylene-based resin. In this case, the ratio of the single material (polypropylene-based resin) contained in the packaging film 100 can be further increased, thereby further improving the recyclability of the packaging film 100.

Alternatively, when the polyolefin-based resin contained in the polyolefin-based substrate layer 21 of the substrate layer 20 and the polyolefin-based adhesive resin contained in the adhesive layer 60 are polyethylene-based resins, the polyolefin-based resin contained in the sealant layer 70 is preferably a polyethylene-based resin. In this case, the ratio of the single material (polyethylene-based resin) contained in the packaging film 100 can be further increased, thereby further improving the recyclability of the packaging film 100.

The polyolefin-based resin contained in the sealant layer 70 may be a stretched film or a non-stretched film, but is preferably a non-stretched film (for example, CPP). In this case, the melting point of the sealant layer 70 can be lowered, thereby making it easier to suppress melting of the substrate layer 20 during heat-sealing of the packaging film 100.

The thickness of the sealant layer 70 is not particularly limited, but preferably 40 µm or greater, and more preferably 50 µm or greater from the viewpoint of improving the heat sealability.

The thickness of the sealant layer 70 is preferably 100 µm or less, more preferably 80 µm or less, even more preferably 70 µm or less, and still even more preferably 60 µm or less from the viewpoint of improving the flexibility of the packaging film 100.

The sealant layer 70 can be formed by adhering it to the adhesive layer 60 by melt extrusion. At this time, the sealant layer 70 may be formed by melt-extruding a sealant layer-forming resin composition for forming the sealant layer 70 and adhering it to the adhesive layer 60, or may be formed by co-extruding an adhesive resin composition and a sealant layer-forming resin composition for forming the sealant layer 70 and adhering it to the adhesive layer 60 with the adhesive resin composition facing the adhesive layer 60. Alternatively, the sealant layer 70 may be formed simultaneously with the adhesive layer 60 by co-extruding an adhesive resin composition for forming the adhesive layer 60 and a sealant layer-forming resin composition for forming the sealant layer 70.

### <Packaged Product>

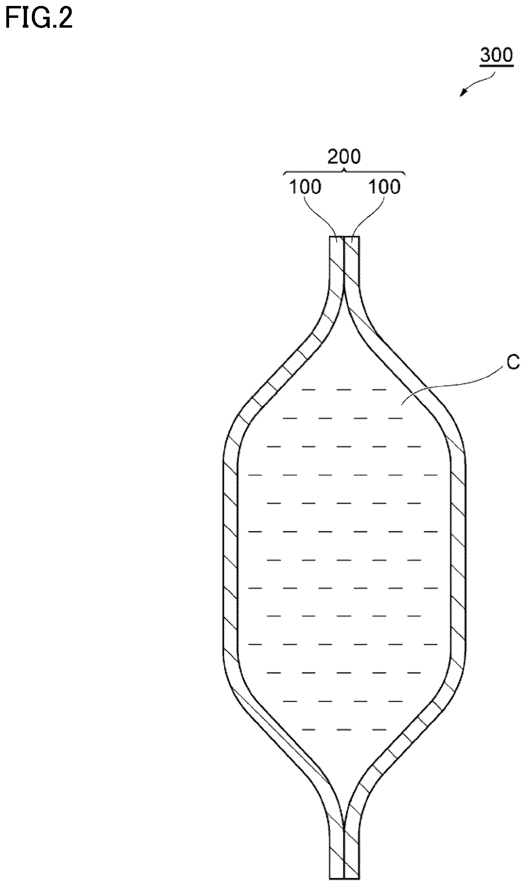

Next, an embodiment of the packaged product of the present disclosure will be described with reference to Fig. 2. Fig. 2 is a cross-sectional view illustrating an embodiment of the packaged product of the present disclosure. In Fig. 2, the same components as those in Fig. 1 are denoted by the same reference signs, and repeated description is omitted.

As shown in Fig. 2, a packaged product 300 includes a packaging bag 200 as a packaging container and contents C contained in the packaging bag 200. The packaging bag 200 shown in Fig. 2 is obtained by using a pair of packaging films 100 and heat-sealing the peripheral edges of the packaging films 100 with the sealant layers 70 facing each other.

The packaged product 300 includes the packaging bag 200, and according to the packaging bag 200, it is possible to provide excellent gas barrier properties while suppressing a decrease in the ratio of the polyolefin-based resin to the entire packaging bag 200. Therefore, according to the packaged product 300, it is possible to facilitate recycling after opening and also suppress deterioration in the quality of the contents C.

The packaging bag 200 can also be obtained by folding a single packaging film 100 and heat-sealing the peripheral edges of the packaging film 100 with the sealant layers 70 facing each other.

Examples of the packaging bag 200 include a three-side seal pouch, a four-side seal pouch, a standing pouch, a gusset pouch, a pillow packaging bag, and the like. The packaging bag 200 may further include a spout or a zipper depending on the application.

The contents C are not particularly limited, and examples of the contents C include foods, liquids, pharmaceuticals, electronic components, and the like.

In the above embodiment, the packaging container is composed of a packaging bag, but the packaging container of the present disclosure may be composed of a liquid paper container or laminated tube instead of the packaging bag. When the packaging container is composed of a liquid paper container, the liquid paper container is obtained using a packaging film, and the packaging film further includes a paper substrate. The paper substrate may be disposed on a side of the gas barrier film opposite to that facing the sealant layer. The laminated tube further includes a cylindrical laminated tube body, a discharge port for discharging the contents of the laminated tube, and a shoulder connecting the laminated tube body and the discharge port. The laminated tube body is obtained using a packaging film, and the packaging film further includes a second sealant layer disposed on a side of the gas barrier film opposite to that facing the sealant layer.

### <Summary of Present Disclosure>

The summary of the present disclosure is as follows.
[1] A packaging film including: a gas barrier film; an adhesive layer; and a sealant layer, which are laminated in this order, wherein the gas barrier film includes a substrate layer and a vapor deposition layer, the substrate layer includes a polyolefin-based substrate layer containing a polyolefin-based resin, and a heat-resistant layer, the heat-resistant layer contains a high-melting-point resin having a melting point of 180°C or higher, the adhesive layer is obtained by adhering an adhesive resin composition containing a polyolefin-based adhesive resin to the gas barrier film by melt extrusion, and the sealant layer contains a polyolefin-based resin.
[2] The packaging film according to [1], wherein the heat-resistant layer is provided on the vapor deposition layer side of the polyolefin-based substrate layer.
[3] The packaging film according to [1] of [2], wherein the polyolefin-based substrate layer is a stretched film.
[4] The packaging film according to any of [1] to [3], wherein the high-melting-point resin of the heat-resistant layer contains a polyamide resin.
[5] The packaging film according to any of [1] to [4], wherein the heat-resistant layer contains a high-melting-point resin having a melting point of 185°C or higher.
[6] The packaging film according to any of [1] to [5], wherein a ratio of a thickness of the heat-resistant layer to a thickness of the gas barrier film is 50% or less.
[7] The packaging film according to any of [1] to [6], wherein the gas barrier film further includes an anchor coat layer between the vapor deposition layer and the substrate layer, the anchor coat layer containing a polyurethane resin.
[8] The packaging film according to any of [1] to [7], wherein the gas barrier film further includes a coating layer between the vapor deposition layer and the adhesive layer, the coating layer covering the vapor deposition layer.
[9] The packaging film according to [8], wherein
   the polyolefin-based resin is a polypropylene-based resin,
   the coating layer covers the vapor deposition layer and has a hardness of 0.4 GPa or greater in a cross-section, and
   a ratio of a thickness of the heat-resistant layer to a thickness of the gas barrier film is 5% or greater and 50% or less.
[10] The packaging film according to [9], wherein the coating layer has a hardness of 0.8 GPa or greater in a cross-section.
[11] The packaging film according to according to any of [1] to [10], wherein
   the polyolefin-based resin is a polyethylene-based resin, and
   a ratio of a thickness of the heat-resistant layer to a thickness of the gas barrier film is 5% or greater and 50% or less.
[12] A packaging container including the packaging film according to any of [1] to [11].
[13] A packaged product including: the packaging container according [12]; and contents contained in the packaging container.

### Examples

The present disclosure will be described in detail below by using examples, but the present disclosure should not be limited to the following examples.

### <Preparation of Coating Solution>

Coating solutions 1 to 3 as gas barrier coating layer-forming compositions used in the examples and comparative examples were prepared as follows.

### (Coating Solution 1)

The following solutions A to C were mixed to obtain a coating solution 1. The coating solution 1 was prepared so that the mass ratio of TEOS (SiO₂ equivalent value), PVA and isocyanurate silane (R²Si(OH)₃ equivalent value) as a silane coupling agent (hereinafter, also referred to as "SC agent") was 68/27/5 when the solid content was 100.
Solution A: A solution obtained by hydrolyzing TEOS (5 mass% (SiO₂ equivalent) hydrolyzed solution of TEOS) by mixing TEOS (trade name: KBE04, solid content: 100 mass%, manufactured by Shin-Etsu Chemical Co., Ltd.), methanol (manufactured by Kanto Chemical Co., Inc.), and 0.1N hydrochloric acid (manufactured by Kanto Chemical Co., Inc.) at a ratio of 17:10:73 (mass ratio), and stirring the resulting mixed solution for 30 minutes.
Solution B: A 5 mass% aqueous solution of PVA (trade name: Kuraray Poval 60-98, manufactured by Kuraray Co., Ltd.)
Solution C: A solution obtained by diluting 1,3,5-tris(3-methoxysilylpropyl)isocyanurate (trade name: X-12-965P, manufactured by Shin-Etsu Chemical Co., Ltd.) as the SC agent with a mixed solution of water/IPA = 1/1 (mass ratio) so that the solid content ratio was 5 mass% (R²Si(OH)₃ equivalent).

### (Coating Solution 2)

The above solutions A to C were mixed to obtain a coating solution 2. The coating solution 2 was prepared so that the mass ratio of TEOS (SiO₂ equivalent value), PVA and isocyanurate silane (R²Si(OH)₃ equivalent value) as the SC agent was 47.6/47.6/4.8 when the solid content was 100.

### (Coating Solution 3)

The above solutions A to C were mixed to obtain a coating solution 3. The coating solution 3 was prepared so that the mass ratio of TEOS (SiO₂ equivalent value), PVA and isocyanurate silane (R²Si(OH)₃ equivalent value) as the SC agent was 85/10.2/4.8 when the solid content was 100.

### <Preparation of Anchor Coat Layer-Forming Composition>

The anchor coat layer-forming composition was prepared as below.

Acrylic polyol and tolylene diisocyanate were mixed so that the number of NCO groups of the tolylene diisocyanate was equivalent to the number of OH groups of the acrylic polyol, and then the mixture was diluted with ethyl acetate so that the solid content (total amount of acrylic polyol and tolylene diisocyanate) was 5 mass%. Further, β-(3,4-epoxycyclohexyl)trimethoxysilane, in an amount of 5 parts by mass relative to 100 parts by mass of the total amount of acrylic polyol and tolylene diisocyanate, was added to the diluted mixture and mixed to prepare an anchor coat layer-forming composition (anchor coat agent).

### <Preparation of Packaging Film>

### (Example 1)

First, homopolypropylene (hereinafter, also referred to as "PP", melting point: 162°C, density: 0.9 g/cm³, MFR (230°C, 2.16 kg load): 3.0 g/10 min) as the polyolefin-based substrate layer (PO-based substrate layer), maleic acid-modified polypropylene (hereinafter, also referred to as "PP1", melting point: 165°C, density: 0.89 g/cm³, MFR (230°C, 2.16 kg load): 6.5 g/10 min) as the substrate adhesive layer, and Nylon 6 (hereinafter, also referred to as "Ny", melting point: 225°C, density: 1.1 g/cm³, MVR (275°C, load 5.0 kg): 70 cm³/10 min) as the heat-resistant layer were co-extruded using a co-extruding film-forming machine at thicknesses of 10 µm, 5 µm and 5 µm, respectively, as shown in Table 1, and biaxially stretched to form a substrate. The temperature of the joining portion of each layer was set to 260°C.

Then, a corona treatment as a surface treatment was applied to the surface of the substrate to obtain a substrate layer.

Then, a 0.030 µm-thick SiOₓ film was formed as the vapor deposition layer on the surface of the substrate layer using an electron beam heating type vacuum vapor deposition device.

Then, the coating solution 3 was applied to the vapor deposition layer to form a coating film. The formed coating film was dried by heating at 80°C for 60 seconds to form a 0.32 µm-thick gas barrier coating layer as the coating layer.

Next, solid printing of a white ink was performed to a thickness of 1 µm by gravure printing onto the gas barrier coating layer to form a printed layer. Thus, a gas barrier film was obtained.

Next, maleic anhydride-modified PP (hereinafter, also referred to as "PP2", melting point: 106°C, density: 0.89 g/cm³, MFR (230°C, 2.16 kg load): 12 g/10 min) as the adhesive layer was laminated on the printed layer of the gas barrier film by melt extrusion at a forming temperature of 250°C to a thickness of 20 µm.

Then, a sealant layer made of block PP (melting point: 160°C, density: 0.90 g/cm³, MFR (230°C, 2.16 kg load): 2.5 g/10 min, hereinafter, also referred to as "bPP") was discharged onto the adhesive layer by T-die casting at a discharge temperature of 250°C to a thickness of 40 µm to thereby obtain a laminate.

Then, the laminate was heated and pressed for 40 seconds using a roll heated to 140°C.

Thus, a packaging film was obtained.

### (Examples 2 and 3)

A packaging film was obtained in the same manner as in Example 1, except that the substrate layer was formed in which the PO-based substrate layer, the substrate adhesive layer and the heat-resistant layer each had a thickness shown in Table 1.

### (Example 4)

A packaging film was obtained in the same manner as in Example 1, except that the heat-resistant layer constituting the substrate layer was changed from Ny to EVOH (trade name "F171B", manufactured by Kuraray Co., Ltd., melting point: 183°C, ethylene content: 32mol%).

### (Comparative Example 1)

A packaging film was obtained in the same manner as in Example 1, except that the substrate layer was composed of only a PO-based substrate layer having a thickness shown in Table 2.

### (Example 5)

A gas barrier film was prepared in the same manner as in Example 1, except that the vapor deposition layer was an AlOₓ layer having a thickness shown in Table 3, and the gas barrier coating layer was formed using the coating solution 1.

Next, maleic anhydride-modified PP (melting point: 106°C, density: 0.89 g/cm³, MFR (230°C, 2.16 kg load): 12 g/10 min) as the adhesive layer was laminated on the printed layer of the gas barrier film by melt extrusion at a forming temperature of 250°C to a thickness shown in Table 2, and then a CPP film (trade name "Torayfan ZK207", manufactured by Toray Advanced Film Co., Ltd., thickness: 40 µm) as the sealant layer was laminated on the adhesive layer by T-die casting to thereby obtain a laminate.

Then, the laminate was heated and pressed for 15 seconds using a roll heated to 140°C.

Thus, a packaging film was obtained.

### (Example 6)

A gas barrier film was prepared in the same manner as in Example 1, except that the gas barrier coating layer was formed using the coating solution 2 as shown in Table 3.

Then, an adhesive layer and a sealant layer were formed on the printed layer of the gas barrier film in the same manner as in Example 5 to thereby obtain a packaging film.

### (Examples 7 and 8)

A substrate layer was prepared in the same manner as in Example 1, except that the heat-resistant layer was not subjected to surface treatment, and the gas barrier coating layer was formed using the coating solution 1.

An anchor coat layer-forming composition prepared as described above was applied to the heat-resistant layer of the substrate layer by gravure coating to form a coating film at a dry thickness shown in Table 3 or 4. Then, the coating film was heated at 120°C for 10 seconds and dried to form an anchor coat layer containing a polyurethane-based resin (PU).

Then, a vapor deposition layer, a coating layer and a printed layer were formed on the anchor coat layer in the same manner as in Example 6 to thereby obtain a gas barrier film.

Then, an adhesive layer and a sealant layer were formed on the printed layer of the gas barrier film in the same manner as in Example 6 to thereby obtain a packaging film.

### (Example 9)

First, a gas barrier film was prepared in the same manner as in Example 1, except that the gas barrier coating layer was formed using the coating solution 1.

Then, an adhesive layer made of PP2 and a sealant layer made of block PP (melting point: 160°C, density: 0.90 g/cm³, MFR (230°C, 2.16 kg load): 2.5 g/10 min) were discharged onto the printed layer of the gas barrier film by co-extrusion at a discharge temperature of 250°C to thicknesses of 5 µm and 55 µm, respectively, and laminated with the adhesive layer being in contact with the printed layer to thereby obtain a laminate.

Then, the laminate was heated and pressed for 15 seconds using a roll heated to 140°C.

Thus, a packaging film was obtained.

### (Example 10)

A gas barrier film was prepared in the same manner as in Example 1, except that, when forming a substrate layer, polyethylene (melting point: 127°C, density: 0.938 g/cm³, MFR (190°C, 2.16 kg load): 3.8 g/10 min) was used as the PO-based substrate layer, an adhesive resin (hereinafter, also referred to as "PE1") made of polyethylene (melting point :120°C, density: 0.91 g/cm³, MFR (190°C, 2.16 kg load): 2.2 g/10 min) was used as the substrate adhesive layer, and the gas barrier coating layer was formed using the coating solution 1.

Next, an adhesive resin (hereinafter, also referred to as "PE2") made of modified-polyethylene (melting point: 120°C, density: 0.910 g/cm³, MFR (190°C, 2.16 kg load): 2.2 g/10 min) as the adhesive layer was laminated on the printed layer of the gas barrier film by melt extrusion at a forming temperature of 260°C to a thickness shown in Table 4, and then an LLDPE film (trade name "SE625N", manufactured by Tamapoly Co., Ltd., thickness: 40 µm) as the sealant layer was laminated on the adhesive layer to thereby obtain a laminate.

Then, the laminate was heated and pressed for 40 seconds using a roll heated to 140°C.

Thus, a packaging film was obtained.

### (Examples 11 and 12)

A packaging film was obtained in the same manner as in Example 10, except that the substrate layer was formed in which the PO-based substrate layer, the substrate adhesive layer and the heat-resistant layer each had a thickness shown in Table 5.

### (Examples 13 and 14)

A substrate layer was prepared in the same manner as in Example 10, except that the heat-resistant layer was not subjected to a surface treatment.

An anchor coat layer-forming composition prepared as described above was applied to the heat-resistant layer of the substrate layer by gravure coating to form a coating film at a dry thickness shown in Table 5 or 6. Then, the coating film was heated at 120°C for 10 seconds and dried to form an anchor coat layer containing a polyurethane-based resin (PU).

Then, a vapor deposition layer, a coating layer and a printed layer were formed on the anchor coat layer in the same manner as in Example 10 to thereby obtain a gas barrier film.

Then, an adhesive layer and a sealant layer were formed on the printed layer of the gas barrier film in the same manner as in Example 10 to thereby obtain a packaging film.

### (Example 15)

A gas barrier film was prepared in the same manner as in Example 10.

Then, an adhesive layer made of adhesive polyethylene (melting point: 120°C, density: 0.910 g/cm³, MFR (190°C, 2.16 kg load): 2.2 g/10 min) and a sealant layer made of LLDPE (trade name "SE625N", manufactured by Tamapoly Co., Ltd.) were discharged onto the printed layer of the gas barrier film by co-extrusion at a discharge temperature of 260°C to thicknesses of 5 µm and 55 µm, respectively, and laminated with the adhesive layer being in contact with the printed layer to thereby obtain a laminate.

Then, the laminate was heated and pressed for 15 seconds using a roll heated to 140°C.

Thus, a packaging film was obtained.

### (Example 16)

A gas barrier film was prepared in the same manner as in Example 1, except that the gas barrier coating layer was formed using the coating solution 1.

Then, an adhesive layer and a sealant layer were formed on the printed layer of the gas barrier film in the same manner as in Example 10 to thereby obtain a packaging film.

### <Hardness of Cross-Section of Coating Layer>

The hardness of the cross-section of the coating layer of the packaging films obtained in the examples or comparative examples was measured by nanoindentation as follows.

Measurement samples (cross-sectional sample) were prepared as below. That is, the packaging film was subjected to corona treatment on both surfaces, and then embedded in a visible light-curable resin (Aronix LCR D-800, manufactured by Toagosei Co., Ltd.). Then, the packaging film was cut perpendicularly to the lamination direction with a diamond knife Microstar LH using an ultramicrotome Leica EM UC7. The cross-section thus formed was subjected to a finish treatment under the conditions of a cutting thickness of Feed 200 nm and a cutting rate of Speed 1 mm/s, and used as a measurement sample.

For the measurement, Hysitron TI-Premier (trade name) manufactured by Bruker Japan K.K. was used as a measurement device, and a Berkovich diamond indenter manufactured by Bruker Japan K.K. was used as an indenter. The measurement conditions were as follows.
- Temperature: Normal temperature (25°C)
- Mode: Load control mode
- Indentation and unloading: After indentation was performed up to a load of 15 µN at an indentation rate of 1.5 µN/sec, the maximum load was held for 5 seconds, and then unloading was performed at the rate of 1.5 µN/sec.
- Measurement points: A shape image of the cross-section of the coating layer was acquired by a shape measurement function of the measurement device, which scans the sample surface with an indenter, and 20 points were specified on the cross-section of the coating layer in the shape image at intervals of 1 µm or greater.

When calculating the hardness, the relationship between the contact depth between the indenter and the sample and the projected contact area was calibrated in advance using fused silica as a standard sample. Then, the region of the unloading curve ranging from 60% to 95% of the maximum load in the unloading phase was analyzed using the Oliver-Pharr method to calculate the hardness of the cross-section of the coating layer. Tables 1 to 6 show the results. In Tables 1 to 6, the hardness of the cross-section of the coating layer is shown in parentheses under the coating solution used to form the coating layer.

### <Evaluation of Packaging Film>

### (1) Gas Barrier Properties

### (Before Retort Treatment or Before Boiling Treatment)

First, the packaging films of Examples 1 to 16 and Comparative Example 1 were cut into test pieces of 100 mm × 100 mm, and the oxygen transmission rate (unit: cc/m²·day·atm) of these test pieces was measured using an oxygen transmission rate meter (trade name: "OX-TRAN 2/20", manufactured by MOCON Inc.) under the conditions of a temperature of 30°C and a relative humidity of 70%. The measurement was performed according to JIS K-7126-2. Tables 1 to 6 show the results.

### (After Retort Treatment)

The packaging films of Examples 1 to 3 and 5 to 9 and Comparative Example 1 were cut into pieces of 297 mm × 210 mm, which were used to prepare three-side seal pouches having an aperture. Here, the cut packaging film was folded with the sealant layers facing each other, and the peripheral edges of the sealant layers were heat-sealed together to form a three-side seal pouch. Then, tap water was introduced through the aperture of the three-side seal pouch, and then the aperture was sealed to prepare a sealed pouch.

The sealed pouch was subjected to retort treatment at 130°C for 30 minutes using a hot-water storage type retort apparatus.

Then, the sealed body after the retort treatment was cut into test pieces of 100 mm × 100 mm, and the oxygen transmission rate (unit: cc/m²·day·atm) of these test pieces was measured in the same manner as before the retort treatment. Tables 1 to 4 show the results.

### (After Boiling Treatment)

The packaging films of Examples 10 to 16 were cut into pieces of 297 mm × 210 mm, which were used to prepare three-side seal pouches having an aperture. Here, the cut packaging film was folded with the sealant layers facing each other, and the peripheral edges of the sealant layers were heat-sealed together to form a three-side seal pouch. Then, tap water was introduced through the aperture of the three-side seal pouch, and then the aperture was sealed to prepare a sealed pouch.

The sealed pouch was subjected to boiling treatment at 95°C for 30 minutes using a boiling treatment apparatus.

Then, the sealed body after the boiling treatment was cut into test pieces of 100 mm × 100 mm, and the oxygen transmission rate (unit: cc/m²·day·atm) of these test pieces was measured in the same manner as before the boiling treatment. Tables 4 to 6 show the results.

### (2) Ratio of Polyolefin-Based Resin to Entire Packaging Film

For the packaging films of Examples 1 to 16 and Comparative Example 1, the ratio (mass%) of the polyolefin-based resin to the entire packaging film was calculated by converting the packaging film weight into specific gravity. Tables 1 to 6 show the results.

**[Table 1]**

| | | | | Example 1 | | Example 2 | | Example 3 | |
|---|---|---|---|---|---|---|---|---|---|
| | | | | Material | Thickness (µm) | Material | Thickness (µm) | Material | Thickness (µm) |
| Gas barrier film | Substrate layer | PO-based substrate layer | | PP | 10 | PP | 5 | PP | 18 |
| | | Substrate adhesive layer | | PP1 | 5 | PP1 | 5 | PP1 | 1 |
| | | Heat-resistant layer | | Ny | 5 | Ny | 10 | Ny | 1 |
| | | Surface treatment | | Yes | | Yes | | Yes | |
| | Anchor coat layer | | | - | - | - | - | - | - |
| | Vapor deposition layer | | | SiOx | 0.03 | SiOx | 0.03 | SiOx | 0.03 |
| | Coating layer | | | Coating solution 3 (1.2 GPa) | 0.32 | Coating solution 3 (1.2 GPa) | 0.32 | Coating solution 3 (1.2 GPa) | 0.32 |
| | Print layer | | | Yes | 1 | Yes | 1 | Yes | 1 |
| Adhesive layer (for melt extrusion) | | | | PP2 | 20 | PP2 | 20 | PP2 | 20 |
| Adhesive layer (for co-extrusion) | | | | - | - | - | - | - | - |
| Sealant layer | | | | bPP | 40 | bPP | 40 | bPP | 40 |
| Extrusion form of adhesive layer | | | | Melt extrusion | | Melt extrusion | | Melt extrusion | |
| Extrusion form of sealant layer | | | | T-die casting | | T-die casting | | T-die casting | |
| Evaluation | Gas barrier properties (cc/m²·day·atm) | | Before retort treatment | 0.6 | | 0.5 | | 0.9 | |
| | | | After retort treatment | 1.4 | | 1.2 | | 2.5 | |
| | | | Before boiling treatment | - | | - | | - | |
| | | | After boiling treatment | - | | - | | - | |
| | Ratio of polyolefin-based resin to entire packaging film | | mass% | 92 | | 86 | | 98 | |

**[Table 2]**

| | | | | Example 4 | | Comparative example 1 | |
|---|---|---|---|---|---|---|---|
| | | | | Material | Thickness (µm) | Material | Thickness (µm) |
| Gas barrier film | Substrate layer | PO-based substrate layer | | PP | 10 | PP | 20 |
| | | Substrate adhesive layer | | PP1 | 5 | - | - |
| | | Heat-resistant layer | | Ny | 5 | - | - |
| | | Surface treatment | | Yes | | Yes | |
| | Anchor coat layer | | | - | - | - | - |
| | Vapor deposition layer | | | SiOx | 0.03 | SiOx | 0.03 |
| | Coating layer | | | Coating solution 3 (1.2 GPa) | 0.32 | Coating solution 3 (1.2 GPa) | 0.32 |
| | Print layer | | | Yes | 1 | Yes | 1 |
| Adhesive layer (for melt extrusion) | | | | PP2 | 20 | PP2 | 20 |
| Adhesive layer (for co-extrusion) | | | | - | - | - | - |
| Sealant layer | | | | bPP | 40 | bPP | 40 |
| Extrusion form of adhesive layer | | | | Melt extrusion | | Melt extrusion | |
| Extrusion form of sealant layer | | | | T-die casting | | T-die casting | |
| Evaluation | Gas barrier properties (cc/m²·day·atm) | | Before retort treatment | 0.9 | | 1.8 | |
| | | | After retort treatment | - | | 4.1 | |
| | | | Before boiling treatment | - | | - | |
| | | | After boiling treatment | - | | - | |
| | Ratio of polyolefin-based resin to entire packaging film | | mass% | 92 | | 99 | |

**[Table 3]**

| | | | | Example 5 | | Example 6 | | Example 7 | |
|---|---|---|---|---|---|---|---|---|---|
| | | | | Material | Thickness (µm) | Material | Thickness (µm) | Material | Thickness (µm) |
| Gas barrier film | Substrate layer | PO-based substrate layer | | PP | 10 | PP | 10 | PP | 10 |
| | | Substrate adhesive layer | | PP1 | 5 | PP1 | 5 | PP1 | 5 |
| | | Heat-resistant layer | | Ny | 5 | Ny | 5 | Ny | 5 |
| | | Surface treatment | | Yes | | Yes | | No | |
| | Anchor coat layer | | | - | - | - | - | PU | 0.02 |
| | Vapor deposition layer | | | AlOx | 0.015 | SiOx | 0.03 | SiOx | 0.03 |
| | Coating layer | | | Coating solution 1 (0.8 GPa) | 0.32 | Coating solution 2 (0.34 GPa) | 0.32 | Coating solution 1 (0.8 GPa) | 0.32 |
| | Print layer | | | Yes | 1 | Yes | 1 | Yes | 1 |
| Adhesive layer (for melt extrusion) | | | | PP2 | 20 | PP2 | 20 | PP2 | 20 |
| Adhesive layer (for co-extrusion) | | | | - | - | - | - | - | - |
| Sealant layer | | | | CPP | 40 | CPP | 40 | CPP | 40 |
| Extrusion form of adhesive layer | | | | Melt extrusion | | Melt extrusion | | Melt extrusion | |
| Extrusion form of sealant layer | | | | T-die casting | | T-die casting | | T-die casting | |
| Evaluation | Gas barrier properties (cc/m²·day·atm) | | Before retort treatment | 0.5 | | 0.6 | | 0.2 | |
| | | | After retort treatment | 1.5 | | 2.2 | | 0.6 | |
| | | | Before boiling treatment | - | | - | | - | |
| | | | After boiling treatment | - | | - | | - | |
| | Ratio of polyolefin-based resin to entire packaging film | | mass% | 92 | | 92 | | 92 | |

**[Table 4]**

| | | | | Example 8 | | Example 9 | | Example 10 | |
|---|---|---|---|---|---|---|---|---|---|
| | | | | Material | Thickness (µm) | Material | Thickness (µm) | Material | Thickness (µm) |
| Gas barrier film | Substrate layer | PO-based substrate layer | | PP | 10 | PP | 10 | PE | 10 |
| | | Substrate adhesive layer | | PP1 | 5 | PP1 | 5 | PE1 | 5 |
| | | Heat-resistant layer | | Ny | 5 | Ny | 5 | Ny | 5 |
| | | Surface treatment | | No | | Yes | | Yes | |
| | Anchor coat layer | | | PU | 2 | - | - | - | - |
| | Vapor deposition layer | | | SiOx | 0.03 | SiOx | 0.03 | SiOx | 0.03 |
| | Coating layer | | | Coating solution 1 (0.8 GPa) | 0.32 | Coating solution 1 (0.8 GPa) | 0.32 | Coating solution 1 (0.8 GPa) | 0.32 |
| | Print layer | | | Yes | 1 | Yes | 1 | Yes | 1 |
| Adhesive layer (for melt extrusion) | | | | PP2 | 20 | - | - | PE2 | 20 |
| Adhesive layer (for co-extrusion) | | | | - | - | PP2 | 5 | - | - |
| Sealant layer | | | | CPP | 40 | bPP | 55 | LLDPE | 40 |
| Extrusion form of adhesive layer | | | | Melt extrusion | | Co-extrusion | | Melt extrusion | |
| Extrusion form of sealant layer | | | | T-die casting | | Co-extrusion | | T-die casting | |
| Evaluation | Gas barrier properties (cc/m²·day·atm) | | Before retort treatment | 0.1 | | 0.8 | | - | |
| | | | After retort treatment | 0.4 | | 2.1 | | - | |
| | | | Before boiling treatment | - | | - | | 1.0 | |
| | | | After boiling treatment | - | | - | | 2.8 | |
| | Ratio of polyolefin-based resin to entire packaging film | | mass% | 90 | | 92 | | 93 | |

**[Table 5]**

| | | | | Example 11 | | Example 12 | | Example 13 | |
|---|---|---|---|---|---|---|---|---|---|
| | | | | Material | Thickness (µm) | Material | Thickness (µm) | Material | Thickness (µm) |
| Gas barrier film | Substrate layer | PO-based substrate layer | | PE | 5 | PE | 18 | PE | 10 |
| | | Substrate adhesive layer | | PP1 | 5 | PE1 | 1 | PE1 | 5 |
| | | Heat-resistant layer | | Ny | 10 | Ny | 1 | Ny | 5 |
| | | Surface treatment | | Yes | | Yes | | No | |
| | Anchor coat layer | | | - | - | - | - | PU | 0.02 |
| | Vapor deposition layer | | | SiOx | 0.03 | SiOx | 0.03 | SiOx | 0.03 |
| | Coating layer | | | Coating solution 1 (0.8 GPa) | 0.32 | Coating solution 1 (0.8 GPa) | 0.32 | Coating solution 1 (0.8 GPa) | 0.32 |
| | Print layer | | | Yes | 1 | Yes | 1 | Yes | 1 |
| Adhesive layer (for melt extrusion) | | | | PE2 | 20 | PE2 | 20 | PE2 | 20 |
| Adhesive layer (for co-extrusion) | | | | - | - | - | - | - | - |
| Sealant layer | | | | LLDPE | 40 | LLDPE | 40 | LLDPE | 40 |
| Extrusion form of adhesive layer | | | | Melt extrusion | | Melt extrusion | | Melt extrusion | |
| Extrusion form of sealant layer | | | | T-die casting | | T-die casting | | T-die casting | |
| Evaluation | Gas barrier properties (cc/m²·day·atm) | | Before retort treatment | - | | - | | - | |
| | | | After retort treatment | - | | - | | - | |
| | | | Before boiling treatment | 0.6 | | 1.5 | | 0.6 | |
| | | | After boiling treatment | 2.1 | | 4.4 | | 1.4 | |
| | Ratio of polyolefin-based resin to entire packaging film | | mass% | 86 | | 98 | | 92 | |

**[Table 6]**

| | | | | Example 14 | | Example 15 | | Example 16 | |
|---|---|---|---|---|---|---|---|---|---|
| | | | | Material | Thickness (µm) | Material | Thickness (µm) | Material | Thickness (µm) |
| Gas barrier film | Substrate layer | PO-based substrate layer | | PE | 10 | PE | 10 | PP | 10 |
| | | Substrate adhesive layer | | PE1 | 5 | PE1 | 5 | PP1 | 5 |
| | | Heat-resistant layer | | Ny | 5 | Ny | 5 | Ny | 5 |
| | | Surface treatment | | No | | Yes | | Yes | |
| | Anchor coat layer | | | PU | 2 | - | - | - | - |
| | Vapor deposition layer | | | SiOx | 0.03 | SiOx | 0.03 | SiOx | 0.03 |
| | Coating layer | | | Coating solution 1 (0.8 GPa) | 0.32 | Coating solution 1 (0.8 GPa) | 0.32 | Coating solution 1 (0.8 GPa) | 0.32 |
| | Print layer | | | Yes | 1 | Yes | 1 | Yes | 1 |
| Adhesive layer (for melt extrusion) | | | | PE2 | 20 | - | - | PE2 | 20 |
| Adhesive layer (for co-extrusion) | | | | - | - | PE2 | 5 | - | - |
| Sealant layer | | | | LLDPE | 40 | LLDPE | 55 | LLDPE | 40 |
| Extrusion form of adhesive layer | | | | Melt extrusion | | Co-extrusion | | Melt extrusion | |
| Extrusion form of sealant layer | | | | T-die casting | | Co-extrusion | | T-die casting | |
| Evaluation | Gas barrier properties (cc/m²·day·atm) | | Before retort treatment | - | | - | | - | |
| | | | After retort treatment | - | | - | | - | |
| | | | Before boiling treatment | 0.4 | | 1.4 | | 0.7 | |
| | | | After boiling treatment | 0.8 | | 3.1 | | 1.7 | |
| | Ratio of polyolefin-based resin to entire packaging film | | mass% | 90 | | 92 | | 93 | |

As seen from the results shown in Tables 1 to 6, in all the packaging films of the examples, the ratio of the polyolefin-based resin to the entire packaging film was as high as 90 mass% or greater, and the oxygen transmission rate before the retort treatment was sufficiently low.

Therefore, the packaging film of the present disclosure was found to have excellent gas barrier properties while suppressing a decrease in the ratio of the polyolefin-based resin to the entire packaging film.

### [Reference Signs List]

- 10: Gas barrier film,
- 20: Substrate layer,
- 21: Polyolefin-based substrate layer,
- 22: Heat-resistant layer,
- 30: Anchor coat layer,
- 40: Vapor deposition layer,
- 50: Coating layer,
- 60: Adhesive layer,
- 70: Sealant layer,
- 100: Packaging film,
- 200: Packaging bag (packaging container),
- 300: Packaged product,
- C: Contents.

## Claims

1. A packaging film comprising:
a gas barrier film;
an adhesive layer; and
a sealant layer, which are laminated in this order, wherein
the gas barrier film includes a substrate layer and a vapor deposition layer,
the substrate layer includes a polyolefin-based substrate layer containing a polyolefin-based resin, and a heat-resistant layer,
the heat-resistant layer contains a high-melting-point resin having a melting point of 180°C or higher,
the adhesive layer is obtained by adhering an adhesive resin composition containing a polyolefin-based adhesive resin to the gas barrier film by melt extrusion, and
the sealant layer contains a polyolefin-based resin.

2. The packaging film according to claim **1,** wherein
the heat-resistant layer is provided on the vapor deposition layer side of the polyolefin-based substrate layer.

3. The packaging film according to claim 1, wherein
the polyolefin-based substrate layer is a stretched film.

4. The packaging film according to claim 1, wherein
the high-melting-point resin of the heat-resistant layer contains a polyamide resin.

5. The packaging film according to claim 1, wherein
the heat-resistant layer contains a high-melting-point resin having a melting point of 185°C or higher.

6. The packaging film according to claim 1, wherein
a ratio of a thickness of the heat-resistant layer to a thickness of the gas barrier film is 50% or less.

7. The packaging film according to claim 1, wherein
the gas barrier film further includes an anchor coat layer between the vapor deposition layer and the substrate layer, the anchor coat layer containing a polyurethane resin.

8. The packaging film according to claim 1, wherein
the gas barrier film further includes a coating layer between the vapor deposition layer and the adhesive layer, the coating layer covering the vapor deposition layer.

9. The packaging film according to claim 8, wherein
the polyolefin-based resin is a polypropylene-based resin,
the coating layer covers the vapor deposition layer and has a hardness of 0.4 GPa or greater in a cross-section, and
a ratio of a thickness of the heat-resistant layer to a thickness of the gas barrier film is 5% or greater and 50% or less.

10. The packaging film according to claim 9, wherein
the coating layer has a hardness of 0.8 GPa or greater in a cross-section.

11. The packaging film according to claim 1, wherein
the polyolefin-based resin is a polyethylene-based resin, and
a ratio of a thickness of the heat-resistant layer to a thickness of the gas barrier film is 5% or greater and 50% or less.

12. A packaging container comprising the packaging film according to any one of claims 1 to 11.

13. A packaged product comprising:
the packaging container according to claim 12; and
contents contained in the packaging container.
